Europäisches Patentamt

European Patent Office

Office européen des brevets

(11) Publication number : **0 657 107 A1**

# EUROPEAN PATENT APPLICATION

(21) Application number : 94308196.8

(22) Date of filing : 08.11.94

(51) Int. Cl.$^6$ : **A23L 3/3418,** A23B 4/16, B61D 27/00

(30) Priority : 13.12.93 GB 9325419

(43) Date of publication of application :
14.06.95 Bulletin 95/24

(84) Designated Contracting States :
AT BE CH DE ES FR GB IT LI NL SE

(71) Applicant : The BOC Group plc
Chertsey Road
Windlesham Surrey GU20 6HJ (GB)

(72) Inventor : Garrett, Michael Ernest
92 York Road
Woking, Surrey (GB)

Inventor : Heywood, Michael John
15 Marjoram Close
Farnborough, Hampshire GU14 9XB (GB)
Inventor : Tomlins, Richard
4 Lauds Close
Henley On Thames, Oxon RG9 IUX (GB)
Inventor : Hudson, Trevord Dane
14 Coniston Way
Church Crookham
Fleet, Hampshire GU13 0RS (GB)
Inventor : Coates, John Robert
42 Weybourne Road
Farnham, Surrey GU9 9HG (GB)
Inventor : Kirschner, Mark Joseph
26 Fairmount Avenue
Morristown New Jersey 07960 (US)

(74) Representative : Gough, Peter et al
The BOC Group plc
Chertsey Road
Windlesham, Surrey GU20 6HJ (GB)

(54) **Storage of perishable foodstuffs.**

(57)   A container (10) for the storage of perishable foodstuffs is chilled by means of a liquefied gas comprising a mixture of oxygen and nitrogen which when totally vaporised has an oxygen concentration of between 15 and 22%, the remaining concentration being substantially of nitrogen. such an atmosphere is breathable, and hence avoids the problems associated with non breathable chilling atmospheres.

FIG.1

EP 0 657 107 A1

The present invention relates to the storage of perishable foodstuffs and relates particularly, but not exclusively, to the generation and use of cryogenic atmospheres for said storage.

Presently know cryogenic storage arrangements comprise a source of liquid nitrogen which, in operation, is introduced in a vaporised or liquid state into a container in which perishable foodstuff is stored. The liquid/vapour acts to chill the contents of the container and is used in conjunction with a suitable control circuit to maintain the foodstuff within an acceptable temperature range during storage, transportation or freezing.

One of the problems associated with the use of nitrogen to generate a chilling atmosphere resides in its non breathable nature. Operators can only enter the container after the introduction of oxygen therein often by opening the doors and waiting several minutes so that air penetrates the container or after donning a breathing apparatus. Clearly, both these steps are inconvenient, time consuming and can be expensive. If an operator enters the container without firstly implementing one of the safety steps, he is likely to be overcome by the lack of oxygen and could die if he is not quickly removed to a normal atmosphere.

Other cryogenic storage arrangements are known in which a combination of liquid nitrogen and liquid oxygen are used to create a cold 'breathable' atmosphere within a storage container. Such systems, however, require the use of two separate storage tanks and the provision of separate metering and control systems so as to ensure the oxygen content within the container remains sufficiently high as to enable an operator to survive therein and also sufficiently low as to ensure it does not create a fire hazard.

It is an object of the present invention to provide a safe cryogenic gas and an apparatus for dispensing the same which reduces and possibly overcomes the problems associated with the above mentioned arrangements.

Accordingly, the present invention provides a liquefied gas for use in temperature control, the liquefied gas comprising a combined mixture of liquefied oxygen and nitrogen for storage in the same container, said liquefied gas when totally vaporised having an oxygen concentration of between 15% and 22% by volume, the remaining concentration being substantially of nitrogen.

Preferably, the liquefied gas, when totally vaporised, has an oxygen concentration of between 16 percent and 21 percent by volume.

In a particularly advantageous arrangement, the liquid gas comprises substantially 15 percent oxygen by volume which when fully vaporised has an oxygen concentration of substantially 18 percent by volume.

The gas may be used in temperature control of perishable food product and may be used in a road transportable chilling apparatus.

In another aspect of the present invention, there is provided an apparatus for the storage of the liquefied gas as detailed above, the apparatus comprising a storage container for storing said gas in liquid form, one or more spray nozzles for vaporising said liquid gas so as to produce a breathable gas having an oxygen concentration of between 18% and 22% and means for directing the atmosphere into the storage container.

The present invention will now be more particularly described by way of example on with reference to the following drawings, in which :

Figure 1 is a general view of a vehicle trailer having a cryogenic refrigeration system in accordance with various aspects of the present invention; and

Figure 2 is a cross sectional view of the cryogenic liquid storage tank shown in figure 1.

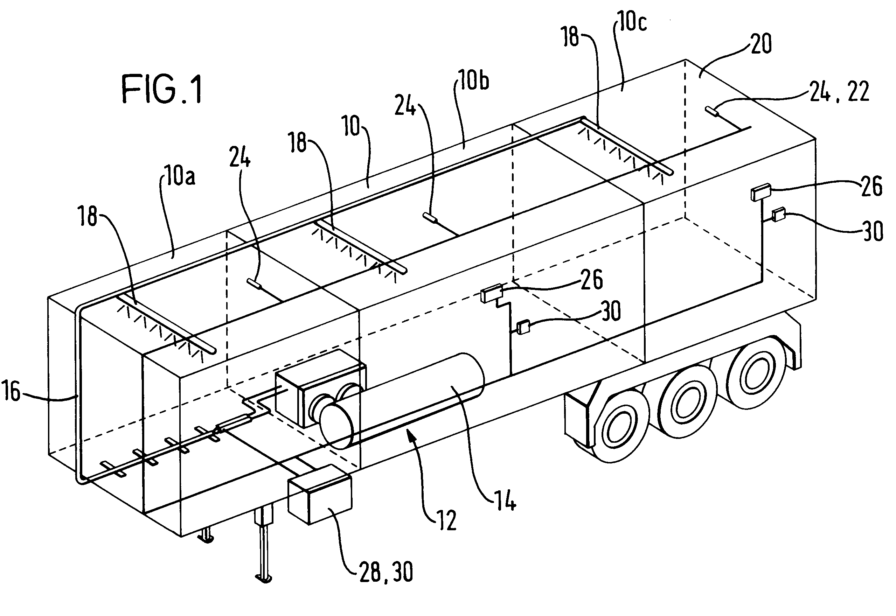

Referring now to the drawings in general but particularly to figure 1, a container 10 for use in, for example, the transportation of perishable food products is provided with a cryogenic refrigeration system shown generally at 12. Components of the refrigeration system include a vacuum insulated storage tank 14, pipeline 16 and a plurality of spraybars 18 situated towards the roof 20 of the container 10. The container may be divided into a number of compartments 10a-10b by movable partitions in which case at least one spraybar 18 is provided per compartment. A control system 22 comprising a plurality of heat sensors 24, thermostats 26 and liquid cryogen flow control means 28 is provided to ensure the interior of the container 10 remains within desired temperature limitations. Thusfar, the refrigeration system 12 is conventional. The present invention, however, makes use of further, non standard, components including an atmosphere composition analyser 30 for monitoring and analysing at least the oxygen content within the container. The analyser 30 may be linked to the control system to facilitate the automatic closedown of the refrigeration process should the oxygen content of the container rise above a predetermined safe limit. Alternatively, the analyser 30 may be linked to a simple warning device so as to warn the operator of the necessity to close the system down.

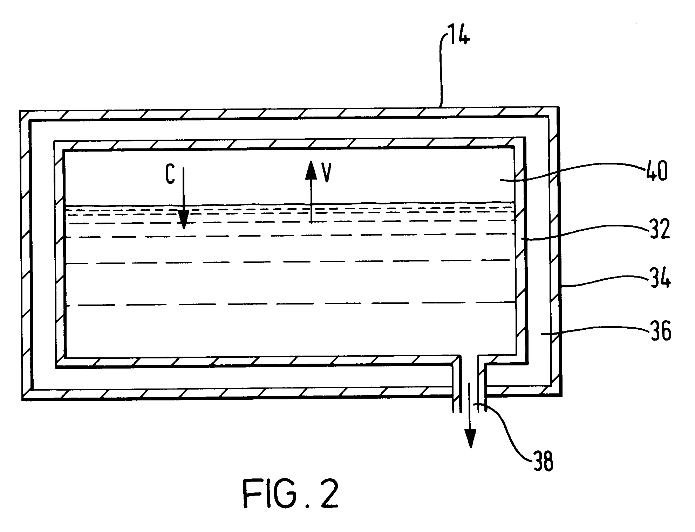

The cryogenic storage tank 14 shown in cross section in figure 2 comprises an inner and an outer skin 32, 34 spaced from one another by a vacuum insulating region 36. An outlet 38 communicates with pipeline 16 for the passage of liquid cryogen thereto.

In operation, tank 14 is filled with a mixture of liquid oxygen and liquid nitrogen the initial proportions of which are selected so as to produce a gas having an oxygen content of between above 18% and 22% when fully vaporised. Whilst the actual ratio of the mixture required will very much depend on the magnitude of any 'enrichment' during storage, transfer and transportation ,it has been found that a mixture containing approximately 15% by weight or 20% by volume of liquid oxygen will result in an oxygen content of approximately 18% within the container after enrichment has been taken into account.

Enrichment of the cryogenic mixture will only occur when the liquid boils and is therefore a function of storage tank heating. Any heating of the tank 14 will result in the more volatile nitrogen boiling off (Arrow V) and vaporising within any headspace 40 in the tank. Such vaporisation will result in the remaining liquid becoming slightly enriched in the less volatile oxygen. Providing the tank 14 does not overpressurise and vent the vaporised atmosphere, the enrichment will be negligible. However, if in practice the liquid in the tank 14 does become excessively enriched then the remaining gas should be vented off and the tank refilled.

It will be appreciated that the magnitude of vaporisation is very much dependent upon the volume of any headspace available within the tank and hence it would be good design practice to avoid excessive headspace.

Liquid cryogen is drawn from the tank in the conventional manner and directed to spraybars 18 for release as and when desired then from in a liquid state. The control system 22 is set to maintain the interior of the container with a predetermined temperature range. Analyser 30 is set to monitor the oxygen control of the container and react so as to either shut down the chilling system or warn the operator of the impending dangers.

The percentage of oxygen present in the final vaporised form should be sufficient to enable the vehicle operator to breath when entering the container 10 but should not be so high as to present a fire hazard. In practice an oxygen concentration of between 15 and 22 percent by volume in the fully vaporised state has been found to provide sufficient oxygen to support life whist still being below that of natural air and therefore not sufficient to present an unacceptable fire hazard. Clearly, it would be desirable to provide some degree of 'safety factor' and hence an oxygen concentration of between 16 and 21 percent by volume is preferable. Most systems could be operated so as to produce an oxygen concentration of about 18 percent within the container and could use the 16 and 22 percent limits or 15 and 22 as the safety limits beyond which the atmosphere should not pass without warning signals being given from the oxygen monitor.

The following calculations are provided by way of illustrating how to determine the percentage oxygen by volume required in the liquid phase for a given percentage oxygen desired in the vapour phase.

| BASIC DATA | AT BOILING POINT | AT 0°C |
|---|---|---|
| Density of Oxygen | 1140 kg/m$^3$ (at -183°C) | 1.429 kg/m$^3$ |
| Density of Nitrogen | 808.1 kg/m$^3$ (at -196°C) | 1.2505 kg/m$^3$ |

Whilst mixed liquids will boil at an intermediate temperature (at one atmosphere) these figures are sufficiently accurate for the present calculations.

*EXAMPLE 1*

Atmosphere Required = 15% Oxygen by volume at 0°C in Container (Remainder = $N_2$)

Assuming 100m$^3$ Volume
Mass of $O_2$ Required = 15 x 1.429 = 21.438 kg
Mass of $N_2$ Required = 85 x 1.2505 = 106.293 kg
Therefore percentage $O_2$ by weight = 16.783%
Therefore the liquid will need this proportion of its mass as $O_2$
Hence, assuming a liquid load of 100 kg
The 16.783 kg of $O_2$ equates to a liquid volume of 14.722 litres and the 83.217 kg of $N_2$ equates to a liquid volume of 102.878 litres
Therefore volume % of liquid $O_2$ is

$$\frac{14.722}{102.978 + 14.722} = 12.508\%$$

Hence a liquid mix containing 12.508% $O_2$ by volume and the remainder being $N_2$ will produce an atmosphere containing 15% $O_2$ at 0°C when fully vaporised, the remaining 85% being $N_2$.

*EXAMPLE 2*

Requiring 16% $O_2$ by Volume at 0°C

Mass $O_2$ per 100m$^3$ = 22.864 kg
Mass $N_2$ per 100m$^3$ = 105.042 kg
    Therefore % $O_2$ by weight = 17.88% $O_2$
The liquid will require this proportion if is mass as $O_2$.
    Assuming a 100 kg load
17.88 kg $O_2$ = 15.684 litres
82.12 kg N = 101.62 litres
    Therefore volume % of liquid $O_2$ is 13.37%

*EXAMPLE 3*

Requiring 18% $O_2$ by Volume at 0°C

    Mass of $O_2$ per 100m$^3$ = 25.722 kg
Mass of $N_2$ per 100m$^3$ = 102.541
    Therefore % $O_2$ by weight = 20.054%
    Assuming a 100 kg load
20.054 kg $O_2$ = 17.59 litres
79.946 kg $N_2$ = 98.931 litres
    Therefore Volume % of liquid $O_2$ = 15.09%

*EXAMPLE 4*

Requiring 21 % $O_2$ by Volume at 0°C

    Mass of $O_2$ per 100m$^3$ = 30.009 kg
Mass of $N_2$ per 100m$^3$ = 98.789 kg
    Therefore % $O_2$ by weight = 23.30%
    Assuming a liquid load of 100 kg
23.30 kg $O_2$ = 20.439 litres
76.70 kg $N_2$ = 94.91 litres
    Therefore Volume % of liquid $O_2$ = 17.72%

*EXAMPLE 5*

Requiring 22% $O_2$ by Volume at 0°C

    Mass of $O_2$ per 100m$^3$ = 31.438 kg
Mass of $N_2$ per 100m$^3$ = 97.539 kg
    Therefore % $O_2$ by weight = 24.37%
    Assuming a liquid load of 100 kg
24.37 kg $O_2$ = 21.38 litres $O_2$
75.63 kg $N_2$ = 93.59 litres $N_2$
    Therefore Volume % of liquid $O_2$ = 18.60%

**Claims**

1.    A liquefied gas for use in temperature control, the liquefied gas characterised by a combined mixture of liquefied oxygen and nitrogen for storage in the same container, said liquefied gas when totally vaporised having an oxygen concentration of between 15% and 22% by volume, the remaining concentration being substantially of nitrogen.

2.    A liquefied gas as claimed in claim 1 characterised in that said gas when totally vaporised, has an oxygen concentration of between 16 percent and 21 percent by volume.

3. A liquefied gas as claimed in Claim 1 characterised in that, when stored in liquid form, said gas comprises substantially 15 percent oxygen by volume which when fully vaporised has an oxygen concentration of substantially 18 percent by volume.

4. A gas as claimed in any one of the preceding claims characterised in that said gas is used in temperature control of perishable food products.

5. A gas as claimed in any one of claims 1 to 4 characterised in that said gas is used in a road transportable chilling apparatus.

6. An apparatus for the storage of the liquefied gas claimed in any one of Claims 1 to 5, characterised in that the apparatus comprises a storage container for storing said gas in liquid form, one or more spray nozzles for vaporising said liquid gas so as to produce a breathable gas having an oxygen concentration of between 15% and 22% and means for directing the atmosphere into the storage container.

7. An apparatus as claimed in Claim 6 characterised in that said container is configured for the storage, or temporary containment of, perishable foodstuffs for freezing or chilling thereof.

8. An apparatus as claimed in Claim 6 or Claim 7 characterised by atmospheric control means comprising an oxygen monitor for monitoring the oxygen concentration in gaseous form and means for ceasing operation of said apparatus or warning an operator should the oxygen concentration fall below or rise above a pre-determined level.

9. An apparatus as claimed in Claim 7 or 8 characterised in that said container comprises a vehicle cargo container.

10. An apparatus as claimed in Claim 7 or 8 characterised in that said container comprises a food freezing apparatus.

11. An apparatus as claimed in any one of Claims 6 to 10 characterised by the inclusion of said liquid gas and in which said liquid gas comprises substantially 15% by volume of oxygen.

FIG.1

FIG.2

EP 0 657 107 A1

European Patent
Office

# EUROPEAN SEARCH REPORT

Application Number

EP 94 30 8196

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | PATENT ABSTRACTS OF JAPAN vol. 005, no. 058 (C-051) 21 April 1981 & JP-A-56 011 746 (DAIDO SANSO KK) 5 February 1981 | 1-5 | A23L3/3418 A23B4/16 B61D27/00 |
| Y | * abstract * | 4,6-11 | |
| X | DATABASE WPI Week 8250, Derwent Publications Ltd., London, GB; AN 82-07883 & JP-A-57 179 554 (SHOWA DENKO KK) 5 November 1982 | 1-4 | |
| Y | * abstract * | 4,6-11 | |
| X | DATABASE WPI Week 7205, Derwent Publications Ltd., London, GB; AN 72-08226 & JP-A-47 003 671 (NAKANISHI W.) 1972 * abstract * | 1-3 | |
| Y | EP-A-0 181 563 (O. TALLAFUS) | 4,6-11 | TECHNICAL FIELDS SEARCHED (Int.Cl.6) |
| A | * page 9 - page 10; claims 1,4,10,11; figure 2 * & DATABASE WPI Week 8742, Derwent Publications Ltd., London, GB; AN 85-290592 & US-A-4 697 508 (O. TALLAFUS) 6 October 1987 * abstract * | 1,4-8,10 | A23L A23B B61D |
| X | EP-A-0 235 119 (FRANZ WELZ INTERNATIONALE TRANSPORTE GMBH) * page 1 - page 2; claims 11-18; figure 1 * | 1,2,4-9 | |

The present search report has been drawn up for all claims

| Place of search | Date of completion of the search | Examiner |
|---|---|---|
| THE HAGUE | 9 March 1995 | Kanbier, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)